# FASCICULE DE BREVET EUROPEEN

(11) **EP 2 731 484 B1**
(45) Date de publication et mention de la délivrance du brevet: **29.06.2016**
(21) Numéro de dépôt: 12744055.0
(22) Date de dépôt: 05.07.2012
(51) Int. Cl.: A47J 45/07

(54) **POIGNEE AMOVIBLE RECHARGEABLE**
WIEDERAUFLADBARER ABNEHMBARER GRIFF
RECHARGEABLE REMOVABLE HANDLE

(30) Priorité: 13.07.2011 FR 1156377
(43) Date de publication de la demande: 21.05.2014
(73) Titulaire: SEB S.A., 69130 Ecully (FR)
(72) Inventeur: BONNEL, Jocelyn, 73310 Vions (FR); HERRADA, José Luis, 38200 Vienne (FR)
(74) Mandataire: Bourrières, Patrice
(86) Numéro de dépôt international: PCT/FR2012/051588
(87) Numéro de publication internationale: WO 2013/007932

(56) Documents cités:
- EP-A2- 1 532 910
- DE-A1-102004 043 579
- US-A1- 2006 196 057

## Description

La présente invention concerne une poignée amovible pour un récipient de cuisson d'aliments.

Les poignées amovibles sont utilisées pour la préhension d'articles culinaires tels des casseroles ou des poêles. Les poignées amovibles peuvent être fixées momentanément à un article culinaire lors de son utilisation et être libérés de l'article culinaire pour faciliter le stockage de ce dernier.

On connaît le document DE 102007054022 qui divulgue une poignée amovible pour un récipient de cuisson comprenant une paroi latérale. La poignée comprend un corps de préhension, des moyens de fixation connectables au récipient de cuisson et déconnectables de celui-ci, un dispositif d'affichage et une source d'énergie. Plus précisément, les moyens de fixation sont connectables à une pièce intermédiaire fixée sur le récipient. Le récipient comprend un capteur de température relié au dispositif d'affichage par une connexion filaire. Le récipient comprend des premiers contacts électriques qui sont connectables à des deuxièmes contacts électriques prévus dans la poignée et déconnectables de ces derniers.

Cependant, les poignées amovibles de l'art antérieur comme celle présentée ci-dessous posent des problèmes lors de leur nettoyage. Ces poignées sont difficilement lavables à l'eau. En effet, la présence d'une source d'énergie du type pile impose de prévoir un logement dans le corps de préhension pour recevoir la source d'énergie et un capot amovible pour refermer le logement. Cet agencement permet de pouvoir retirer le capot pour changer la pile. Cependant, la présence d'eau dans le logement peut provoquer des courts-circuits et endommager les dispositifs électroniques.

On connaît aussi EP-A-1532910 qui divulgue une poignée de récipient de cuisson d'aliments comprenant une paroi latérale, ladite poignée comprenant :
- un corps de préhension,
- et des moyens de fixation connectables au récipient de cuisson et déconnectables de celui-ci.

Les moyens de fixation comprennent une vis. Cette vis est montée entre le corps de préhension (repère 2) et le support de fixation (repère 3) solidaire du récipient.

EP-A-1532910 propose des moyens de connexion électromagnétique reliés à une source d'énergie électrique rechargeable et de disposer le dispositif électrique (repères 5-9) dans un support de fixation (repère 3) rapporté.

Si la partie de la poignée, séparable du support de fixation solidaire du récipient, est effectivement dissociée de ce support, on évite, avec cette solution, un problème d'étanchéité sur la poignée. Or l'invention vise à fournir une poignée amovible nettoyable à l'eau, tout en remédiant aux inconvénients de l'art antérieur, dans ce cadre.

A ce sujet, le problème de l'invention lié à l'étanchéité de la poignée du fait d'une source d'énergie électrique rechargeable logée dans la partie amovible de la poignée ne se pose pas dans EP-A-1532910, d'autant que le dévissage de la vis précitée n'est pas prévu en fonctionnement normal de l'article, à la différence de l'invention avec sa poignée amovible.

En d'autres termes, l'art antérieur invite à placer le dispositif électrique et/ou électromécanique à l'écart de [la partie amovible] d'une poignée.

Pour surmonter les difficultés précitées, il est ici proposé que la poignée, qui est donc amovible, comprenne, outre le corps de préhension et lesdits moyens de fixation :
- un dispositif électrique et/ou électromécanique logé dans le corps de préhension,- une source d'énergie électrique rechargeable alimentant en courant électrique le dispositif électrique et/ou électromécanique, et
- des moyens de connexion électromagnétique reliés à la source d'énergie électrique rechargeable et connectables électriquement à une source d'alimentation électrique externe à la poignée pour permettre le rechargement de la source d'énergie électrique rechargeable.

On entend par « moyens de connexion électromagnétiques », des moyens de connexion qui peuvent être soit électriques, soit magnétiques.

Ainsi, l'invention fournit une poignée amovible plus facilement nettoyable à l'eau. L'utilisation d'une source d'énergie électrique rechargeable qui n'a pas besoin d'être remplacée permet de simplifier la conception de la poignée en évitant de prévoir des éléments destinés à être régulièrement démontés pour changer la pile. Ceci permet donc d'améliorer l'étanchéité de la poignée.

D'autres caractéristiques et avantages de l'invention ressortiront clairement de la description qui en est faite ci-après, à titre indicatif et nullement limitatif, en référence aux dessins annexés, dans desquels :
- la figure 1 représente une vue en perspective d'une poignée amovible en position ouverte, selon un mode de réalisation de l'invention ;
- la figure 2 représente une vue en perspective d'un récipient, selon un mode de réalisation de l'invention ;
- la figure 3 représente une coupe longitudinale d'un article culinaire compatible avec un chauffage par induction, selon un mode de réalisation de l'invention ;
- la figure 4 représente une vue en perspective d'un récipient, selon un autre mode de réalisation de l'invention ;
- la figure 5 représente une vue de face d'un mors fixe d'une poignée, selon un mode de réalisation de l'invention ;
- la figure 6 représente une coupe longitudinale en détail d'un plot de connexion électrique, selon un mode de réalisation de l'invention;
- la figure 7 représente une coupe longitudinale en détail de ce plot de connexion électrique connecté à une borne du récipient;
- la figure 8 représente une coupe longitudinale d'une poignée amovible munie de pinces motorisées en position ouverte, selon un mode de réalisation possible ;
- la figure 9 représente une vue en perspective d'une poignée amovible munie de contacts sur sa face arrière et d'une prise ;
- la figure 10 représente la poignée munie d'une bobine d'induction secondaire en position de rechargement sur une base de rechargement comprenant une bobine d'induction primaire;
- la figure 11 représente une poignée amovible comprenant un capot et un joint d'étanchéité ;
- la figure 12 représente une poignée amovible dans laquelle la source d'énergie rechargeable est noyée dans la matière formant le corps de préhension ;
- la figure 13 représente une base de rechargement comprenant deux contacts électriques ;
- la figure 14 représente une vue en coupe d'une poignée comprenant une borne connectable à l'extrémité du bord du récipient.

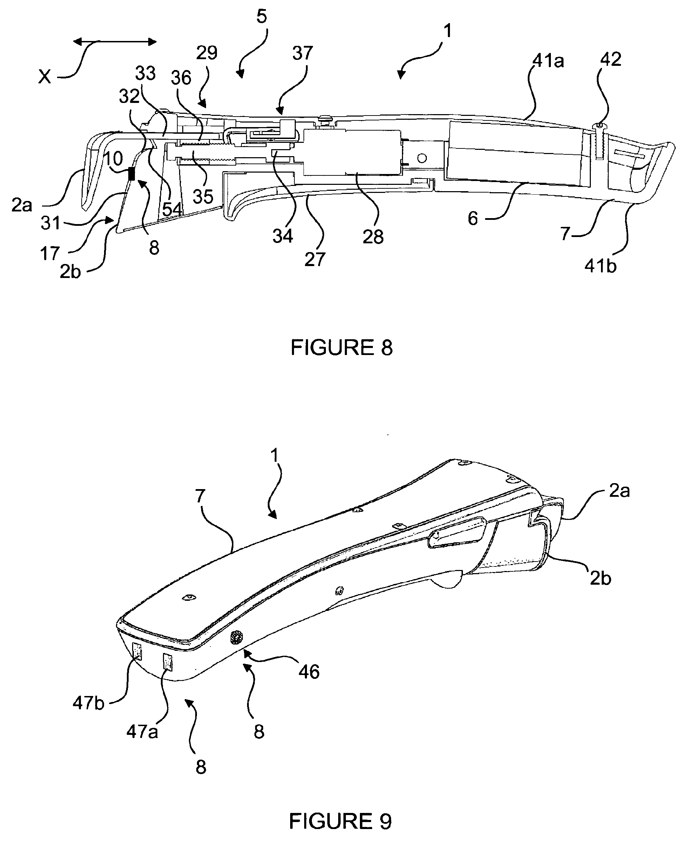

Comme illustré sur la figure 8, la poignée amovible 1 comprend un corps de préhension 7, des moyens de fixation 2 connectables au récipient de cuisson 3 et déconnectables de celui-ci, un dispositif électrique et/ou électromécanique 5 logé dans le corps de préhension 7, une source d'énergie électrique rechargeable 6 alimentant en courant électrique le dispositif électrique et/ou électromécanique 5, et des moyens de connexion électromagnétique 8 reliés à la source d'énergie électrique rechargeable 6 et connectables électriquement à une source d'alimentation électrique externe 16 à la poignée pour permettre le rechargement de la source d'énergie électrique rechargeable 6. Les moyens de fixation 2 sont portés par le corps de préhension 7. Ils comprennent de préférence, comme illustré, une partie fixe sur lui et une partie mobile par rapport à lui, bien que solidaire de ce corps.

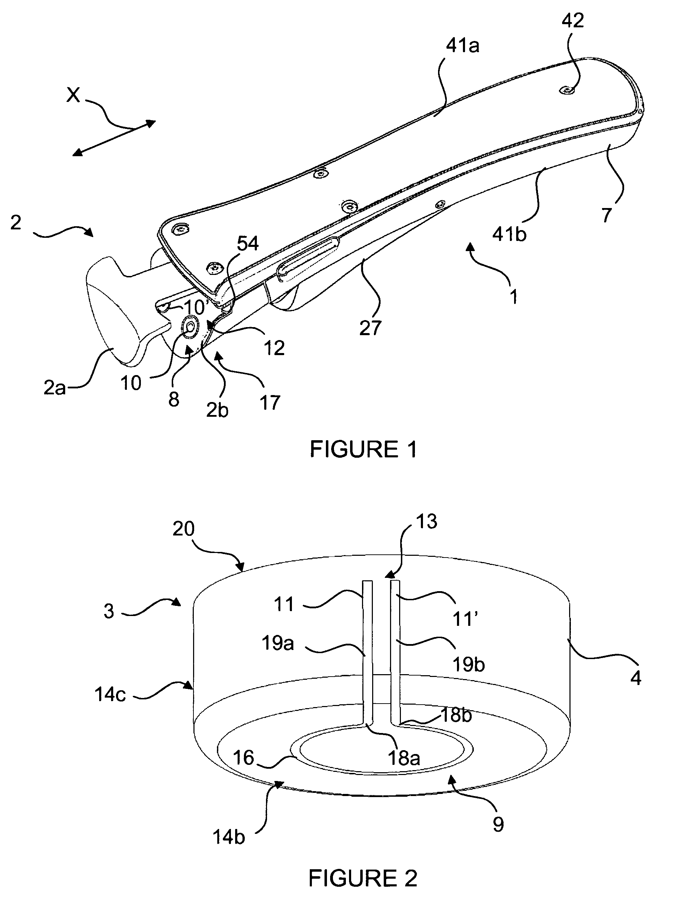

Selon un mode de réalisation possible, le corps de préhension 7 ne comprend pas de couvercle pour accéder à la source d'énergie électrique rechargeable 6. Le corps de préhension 7 comprend deux enveloppes 41a, 41b fixées l'une à l'autre par des moyens de fixation 42 telles des vis, par exemple, comme illustré sur les figures 1 et 8. Ces enveloppes renferment la source d'énergie électrique rechargeable 6 sans ouverture, ni capot pour la retirer.

Le corps de préhension 7 peut comprendre des moyens d'étanchéité 43 pour assurer l'étanchéité de la source d'énergie électrique rechargeable 6 aux liquides.

Les moyens d'étanchéité 43 peuvent comprendre un joint disposé entre les deux enveloppes 41a, 41b (non représenté).

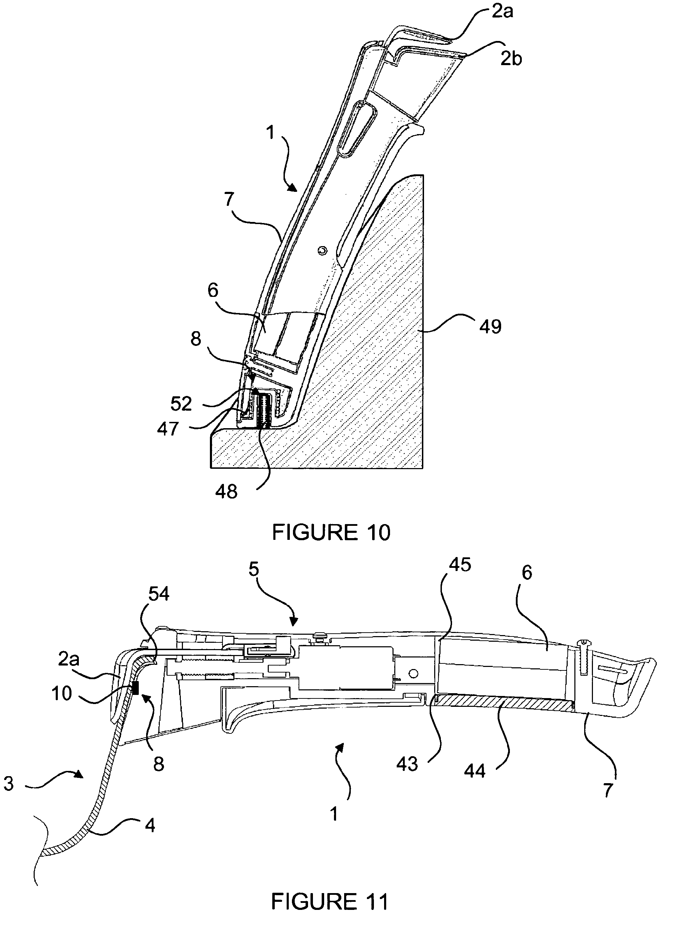

Selon un autre mode de réalisation possible illustré sur la figure 11, le corps de préhension 7 peut comprendre un logement 45 recevant la source d'énergie électrique rechargeable 6. Ce logement 45 est étanche. Il est refermé par un capot 44. Les moyens d'étanchéité 43 comprennent un joint 43 disposé entre le capot 44 et le bord périphérique externe entourant le logement 45. Le joint 43 peut être un joint plat.

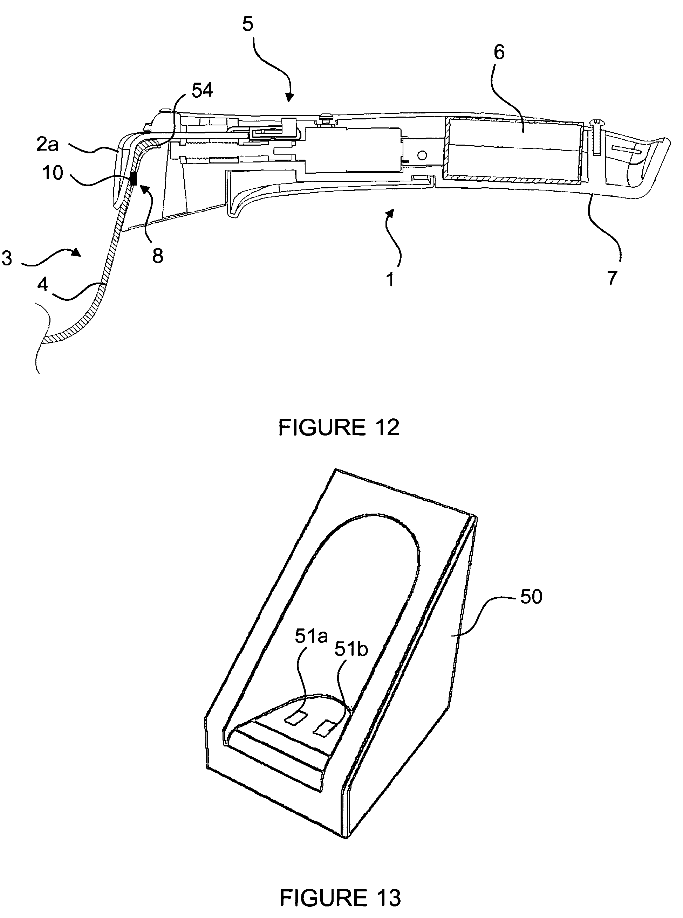

Selon un autre mode de réalisation possible illustré sur la figure 12, la source d'énergie électrique rechargeable 6 est noyée dans la matière formant le corps de préhension 7 lors du moulage de ce dernier.

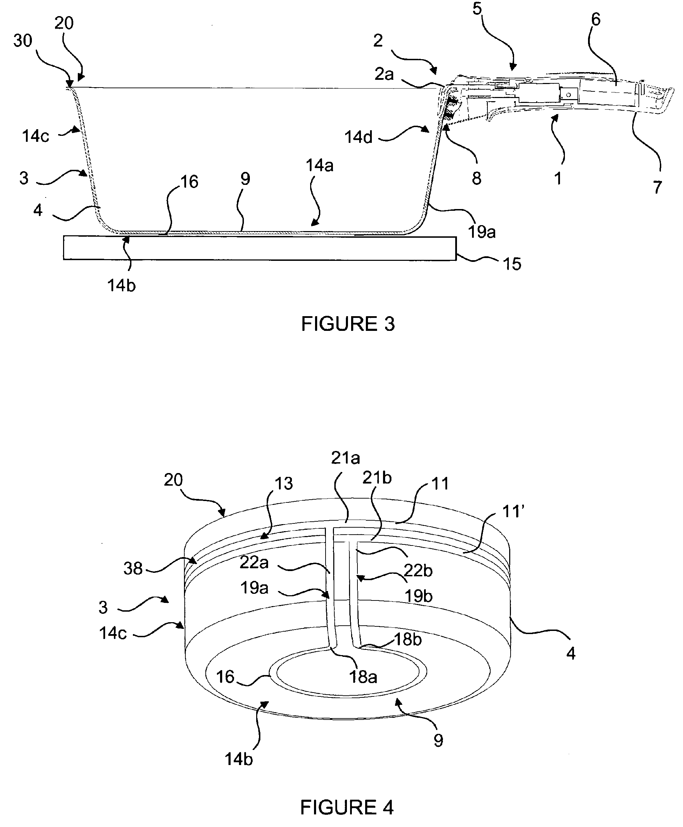

Selon un mode de réalisation possible illustré sur la figure 3, la source d'alimentation électrique externe 16 est formée par une bobine 16 assurant une récupération d'énergie électrique. Les moyens de connexion électromagnétique 8 de la poignée 1 comprennent au moins une borne 10, 10' adaptée à venir en contact avec au moins une borne complémentaire 11, 11' prévue sur un récipient de cuisson 3 et reliée à la source d'alimentation électrique externe 16.

Le récipient 3, comme illustré sur les figures 2 et 4, peut comprendre au moins une bobine 16 générant de l'électricité à partir d'un flux magnétique produit par un moyen de chauffage par induction. Ce flux magnétique permet d'alimenter le dispositif électrique et/ou électromécanique 5 de la poignée 1. La bobine 16 est disposée sur la surface externe 14b du fond 9 du récipient 3, de préférence à ailleurs, notamment la surface interne 14a.

De préférence, la bobine 16 est déposée par sérigraphie de façon à obtenir une piste sérigraphiée. La piste sérigraphiée comprend au moins un matériau électriquement conducteur.

Avantageusement, la bobine 16 est disposée sur la surface externe 14b du fond 9 du récipient 4, permettant une proximité avec la surface du moyen de chauffage par induction 15, sans écran magnétique entre eux (une couche de PTFE ou d'émail étant possible, puisque ne formant pas un tel écran).

Chaque borne de connexion 10, 10' est connectable électriquement avec au moins une borne complémentaire 11, 11' prévue sur le récipient 3 qui est reliée à la bobine 16.

Les moyens de fixation 2 comprennent une surface de contact 12 adaptée à venir en contact avec une surface de contact complémentaire 13 prévue sur le récipient 3 afin d'assurer la fixation de la poignée 1 sur le récipient 3. La surface de contact 12 des moyens de fixation 2 porte au moins une borne 10, 10'.

Les moyens de fixation 2 comprennent deux mors 2a, 2b formant pince et mobiles l'un par rapport à l'autre pour fixer la poignée 1. L'un des deux mors 2a, 2b comprend au moins deux bornes 10, 10'.

Les deux mors 2a, 2b pincent la paroi 4 du récipient 3 sur laquelle est disposée au moins une borne complémentaire 11, 11'. Chaque borne 10, 10' de la poignée 1 est en contact avec cette borne complémentaire 11, 11'.

Les deux mors 2a, 2b formant pince comprennent un mors fixe 2b et un mors mobile 2a par rapport au corps de préhension 7. Les bornes 10, 10' peuvent être disposées sur le mors fixe 2b, comme représenté sur les figures 1, 3 et 5. De préférence, le mors fixe 2b est formé par une partie avant 17 du corps de préhension 7 qui est en contact avec la surface externe 14c de la paroi du récipient 3. Dans ce mode de réalisation, la bobine 16 est disposée sur la surface externe 14b du fond 9 du récipient 3.

Selon un autre mode de réalisation possible (non représenté), les bornes 10, 10' peuvent être disposées sur le mors amovible 2a. Dans ce mode de réalisation, la bobine 16 est disposée sur la surface interne 14a du fond 9 du récipient 3.

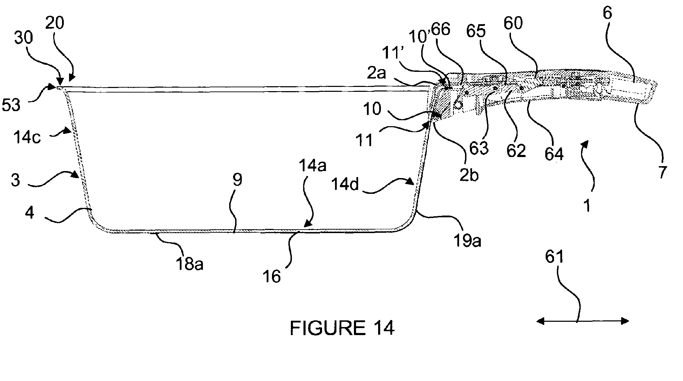

Selon un autre mode de réalisation possible représenté sur la figure 14, la poignée est munie de moyens de fixation mécaniques tels que ceux décrits dans la demande EP-1991098 à titre d'exemple. D'autres moyens de fixation mécaniques sont également utilisables.

Pour déplacer le mors mobile 2a vis-à-vis du mors fixe 2b situé en face, on utilise un coulisseau 60 monté en translation selon la direction longitudinale 61 par rapport au corps 7, et des première et seconde bielles pivotantes 62, 63. La seconde bielle agit directement sur le mors mobile 2a. Un bouton de manoeuvre 64 monté basculant sur le corps 7 sollicite la seconde bielle 63 et par là la chaîne articulée 60, 62, 63 via un ergot 65 traversant une lumière de la tige 66 qui se termine par le mors 2a. Davantage de détails sont disponibles dans EP 2007260.

Dans cet exemple, le mors fixe 2b comprend deux bornes 10, 10' dont une borne 10 inférieure destinée à venir en contact avec une première borne complémentaire 11 du récipient formée par une liaison électrique 19a disposée sur la paroi latérale 4 du récipient et une borne supérieure 10' destinée à venir en contact avec l'extrémité 53 du bord recourbé 30 du récipient qui forme alors la deuxième borne complémentaire 11' du récipient. La bobine 16 comprend une extrémité 18a qui est en contact avec une couche métallique formant le récipient. Ainsi, le courant peut traverser cette couche métallique jusqu'à l'extrémité 53 du bord recourbé 30.

La borne 10 inférieure du récipient est positionnée à proximité de la paroi inférieure du corps de préhension 7. Le corps de préhension 7 comprend un logement 54 positionné entre la surface de contact 12 du mors fixe 2b et le mors mobile 2a. Le logement 54 est destiné à recevoir l'extrémité 53 du bord recourbé 30 du récipient. La borne supérieure 10' est disposée dans ce logement 54 de façon à être en contact avec l'extrémité 53 du bord recourbé 30 du récipient.

Ce mode de réalisation qui est valable pour des moyens de fixation mécanique l'est également pour des moyens de fixation électromécaniques.

La source d'énergie électrique rechargeable 6 peut être un accumulateur ou une super capacité logée dans le corps de préhension 7. Elle peut être reliée électriquement à la fois à la bobine 16 pour son rechargement en énergie électrique et au dispositif électrique et/ou électromécanique 5 pour l'alimenter. Par exemple, l'accumulateur peut présenter une tension de 3, 6 Volt et une capacité de 780 milliampères*heure.

Selon un mode de réalisation possible, la bobine 16 comprend une boucle ouverte et deux extrémités 18a, 18b chacune reliée à une liaison électrique 19a, 19b fixée sur la paroi latérale 4 du récipient 3. La liaison électrique 19a, 19b s'étend jusqu'au voisinage du bord supérieur 20 de la paroi latérale 4 et forme la borne complémentaire 11, 11' du récipient 3 qui est connectable à l'une des bornes 10, 10' de la poignée 1.

Selon le mode de réalisation représenté sur la figure 2, deux liaisons électriques 19a, 19b sont fixées sur la surface externe 14c de la paroi latérale 4 du récipient 3. Les deux liaisons électriques 19a, 19b sont sensiblement rectilignes, perpendiculaires au fond 9 du récipient 3 et adjacentes. La poignée 1 ou plus précisément le mors fixe 2b comprend alors deux bornes 10, 10' connectables aux liaisons électriques 19a, 19b et alignées sensiblement de façon parallèle au fond 9 lorsque la poignée est fixée sur le récipient (figure 1). La poignée peut être ainsi fixée sur le récipient et être réglable en hauteur sur une courte distance.

En variante, les deux liaisons électriques 19a, 19b peuvent être courbes.

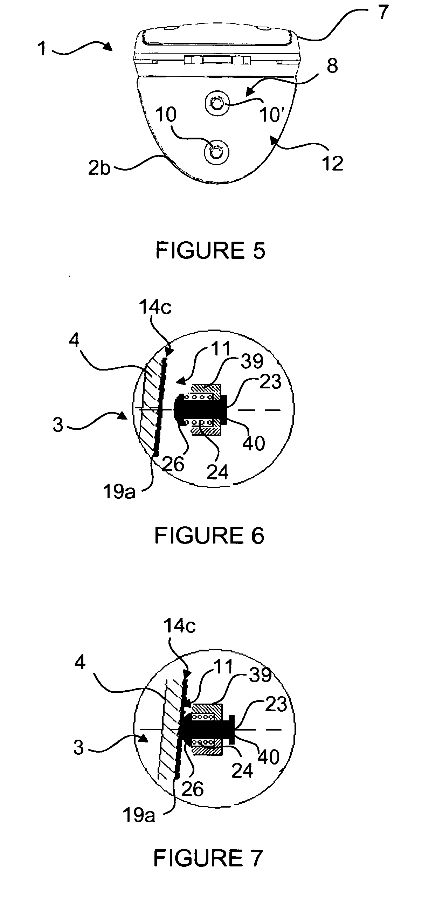

Selon le mode de réalisation représenté sur les figures 3 et 4, chaque liaison électrique 19a, 19b est formée par une partie périphérique 21a, 21b entourant la paroi latérale 4 et une partie intermédiaire 22a, 22b reliant la partie périphérique 21a, 21b à l'une des extrémités 18a, 18b de la bobine 16. Les parties périphériques 21a, 21b sont distantes l'une de l'autre. Cette distance est de préférence la plus petite possible pour ne pas réduire la puissance maximale transmise. Dans ce cas, la poignée 1 ou plus précisément le mors fixe 2b comprend deux bornes 10, 10' connectables aux parties périphériques 21a, 21b respectives et alignées suivant une direction non parallèle au fond 9 du récipient 3 (figure 5). Dans l'exemple de la figure 5, les deux bornes 10, 10' sont alignées verticalement et de façon perpendiculaire au fond 9 qui est plan et horizontal. Les parties périphériques 21a, 21b sont circulaires. Elles peuvent également être ovoïdes ou autre.

Les parties périphériques 21a, 21b sont séparées par un espace 38 de préférence constant (figure 4). Il peut être variable. Cette distance est de préférence la plus petite possible pour ne pas réduire la puissance maximale transmise.

Les parties périphériques 21a, 21b sont proches du bord 20 du récipient 4. Il est ainsi possible de positionner la poignée 1 sur toute la périphérie de la paroi latérale 4. Aucune position n'est prédéterminée. Ceci est utile lorsque le récipient 3 chauffe. Il n'est pas nécessaire de se déplacer ou de tourner le récipient mal positionné pour fixer la poignée. Les risques de brulure sont évités. De plus, lorsqu'un endroit de la partie périphérique 21a, 21b est sale ou abimé, il est possible de connecter la poignée 1 à un autre endroit.

En variante, le fond 9 peut comprendre plusieurs bobines 16 comprenant chacune deux extrémités 18a, 18b. Par exemple, si le fond 9 comprend deux bobines 16, la poignée peut comprendre quatre bornes connectables à quatre bornes disposées sur la paroi du récipient (non représenté).

En variante, lorsque le fond 9 comprend deux bobines 16, la poignée peut ne comprendre que deux bornes 10, 10'. En positionnant différemment la poignée par rapport au récipient, il est possible de connecter les bornes de la poignée sur l'une ou l'autre des bobines. Les bobines peuvent être disposées en série ou en parallèle. Dans ce cas on positionne les liaisons électriques 19a, 19b et les bornes complémentaires 11, 11' sur la surface du récipient de façon à former seulement deux bornes complémentaires 11, 11'.

Le nombre de boucles ou de spires est à adapter en fonction du besoin en énergie du dispositif électrique et/ou électromécanique 5 à alimenter. Un écran d'affichage LCD consomme 100mW et un moteur pour actionner le mors mobile 2a d'un moyen de fixation consomme 6W, par exemple. Une seule boucle récupérant 20W est donc nécessaire.

Selon un mode de réalisation possible, les bornes 10, 10' de la poignée 1 sont des plots de contact électrique 23 repoussés par des moyens de rappel élastique 24, comme illustré sur les figures 6 et 7. Ils permettent de limiter la résistance de contact à moins de 100mOmhs et de préférence à moins de 10mOmhs, améliorant ainsi notablement le rendement.

Chaque plot de contact électrique 23 présente une forme allongée et une section circulaire. Chaque plot de contact électrique 23 présente une section d'au moins 0,75mm² pour résister à un courant de 0,5A au moins, et de préférence de 3A.

Chaque plot de contact électrique 23 comprend une tête 26 à l'une de ses extrémités qui est destinée à venir en contact avec la borne 11, 11' du récipient 3 et plus précisément avec la liaison électrique 19a, 19b du récipient 3. Cette tête 26 est de préférence de forme arrondie ou convexe.

Chaque plot de contact électrique 23 est maintenu dans un support 39 de forme cylindrique et est mobile en translation par rapport au support 39 entre une positon déployée dans laquelle le plot de contact électrique 23 n'est pas en contact avec une borne (figure 6) et une position rétractée dans laquelle le plot de contact électrique 23 est en contact et en compression contre une borne 11, 11' du récipient 3 (figure 7).

Le support 39 comprend un logement dans lequel est disposé un ressort 24 entourant la partie centrale du plot. Le ressort 24 exerce une force vers l'extérieur et contre la partie inférieure de la tête 26 du plot de contact électrique 23. Ce ressort 24 est en appui contre le fond du support 39. Le plot de contact électrique 23 comprend un pied 40 à son autre extrémité et qui est disposé à l'extérieur du support 39. Le pied 40 vient en butée contre la surface externe du support 39 lorsque le plot 23 est en position déployée (figure 6). La tête 26 du plot est également disposée à l'extérieure du support 39. La tête 26 est en butée contre la surface avant externe du support 39 lorsque le plot 23 est en position contractée (figure 7). Ainsi, le plot 23 est mobile par rapport au support 39 tout en étant maintenu par ce dernier.

L'ensemble formé par le plot 23, le support 39 et le ressort 24 est porté par le mors fixe 2b de la poignée, c'est-à-dire par la partie avant 17 du corps de préhension 7. La tête 26 du plot fait saillie sur la surface 12 du mors fixe 2b lorsque le plot 23 est en position déployée (figure 6).

Lorsque le récipient 3 est posé sur une plaque d'induction, l'inducteur de la plaque d'induction génère un flux magnétique qui est capté par le récipient 3 qui chauffe. Une partie de l'énergie est récupérée par la bobine 16 et utilisé pour alimenter un dispositif électrique et/ou électromécanique et/ou la source d'énergie électrique rechargeable 6. Le courant ainsi induit dans cette bobine est alternatif avec une fréquence en général d'environ 25 KHz. Un redresseur et des moyens de filtrage peuvent être prévus. Un régulateur de tension peut aussi être prévu. Ces éléments sont logés dans la poignée 1. Un condensateur peut être prévu pour faire travailler le système à la résonnance et arriver à transmettre un maximum d'énergie.

La poignée 1 peut comprendre des moyens de commande 27 pour commander le fonctionnement et l'arrêt du dispositif électrique et/ou électromécanique 5, comme illustré sur la figure 8. Ce dernier peut comprendre un moteur 28 et un dispositif d'actionnement 29 entrainé par le moteur 28. Le dispositif d'actionnement 29 est adapté à actionner le mors mobile 2a.

En variante, les moyens de fixation peuvent être mécaniques et comprendre des crochets solidaires de la poignée 1 et destinés à s'insérer dans des orifices prévus sur la paroi latérale du récipient. D'autres moyens de fixation sont également possibles comme un système vis-écrou, par exemple. Dans ce cas, le dispositif électrique et/ou électromécanique 5 peut comprendre des moyens d'affichage ou une brosse actionnée par le moteur 28, par exemple.

Les moyens de fixation peuvent être fixés à la paroi latérale 4 du récipient 3 ou à une autre partie du récipient telle un étrier solidaire de la paroi latérale.

Le corps de préhension 7 présente une forme allongée et s'étend suivant une direction longitudinale (X).

En variante, les deux mors 2a, 2b formant pince peuvent être mobiles suivant la direction longitudinale (X) et en sens opposé.

La poignée est prévu pour être fixée de façon amovible à un récipient 3, du type ustensile culinaire (casserole, poêle,...). La paroi latérale 4 peut présenter un bord recourbé 30 sur sa partie supérieure qui forme un rebord verseur. L'exemple des figures 3 et 8 est donné pour une paroi latérale 4 comprenant un bord recourbé 30 vers l'extérieur. Le mors fixe 2b est formé par le corps de préhension 7. Plus précisément, le corps de préhension 7 comprend une partie avant 17 ayant une surface de contact qui est destinée à venir en contact avec la surface externe 14c de la paroi latérale 4 du récipient 3. La surface de contact de la partie avant 17 du corps présente une forme complémentaire de celle de la surface externe 14c de la paroi latérale 4 et plus précisément de la surface externe du bord recourbé 30 du récipient 3. Plus particulièrement, la surface de contact de la partie avant 17 du corps de préhension 7 présente une portion plate 31 prolongée par une portion recourbée 32 vers l'intérieur du corps de préhension 7. Le corps de préhension 7 est de préférence en bakélite. Lorsque la poignée amovible 1 est fixée sur le récipient 3, cette dernière est sensiblement perpendiculaire à un plan tangent à la paroi latérale 4 du récipient 3. Le mors mobile 2a présente une forme complémentaire de celle de la surface interne 14d de la paroi latérale et plus précisément de la surface interne du bord recourbé 30 du récipient 3.

En variante, les deux mors 2a, 2b formant pince de la poignée 1 peuvent être adaptés pour être fixés sur une paroi latérale droite sans bord recourbé, telle que représentée sur les figures 2 et 4.

Le mors mobile 2a est prolongé par un bras 33 coulissant dans une glissière prévue dans le corps de préhension 7. Le bras 33 s'étend selon la direction longitudinale (X). Il présente une forme aplatie.

En variante, le moteur 28 peut être remplacé par un électroaimant, un servomoteur, un vérin pneumatique ou un vérin électrique, par exemple.

Le moteur électrique 28 est alimenté en courant par les moyens de stockage d'énergie électrique 6 et/ou la bobine 16. Le moteur électrique 28 présente un arbre 34 entraîné en rotation. De manière préférée, le moteur électrique 28 comprend un réducteur. La vitesse de rotation du moteur électrique 28 est d'au moins de 340 tours par minute, et de préférence de 360 tours par minute. Le couple du moteur est d'au moins de 80 mN/m et de préférence de 100 mN/m.

Le dispositif d'actionnement 29 comprend des premiers moyens de transmission 35 adaptés à transmettre le mouvement de rotation du moteur électrique 28 à des deuxièmes moyens de transmission 36 solidaires du mors mobile 2a pour entraîner le déplacement en translation du mors mobile 2a entre la position d'ouverture et la position fermée.

Selon une variante possible, les premiers moyens de transmission 35 comprennent une tige filetée 35 entraînée en rotation par le moteur électrique 28. Les deuxièmes moyens de transmission 36 comprennent un élément mobile 36 muni d'un orifice fileté s'engageant dans la tige filetée 35. La rotation de la tige filetée 35 entraîne le déplacement en translation de l'élément mobile 36 le long de celle-ci et par conséquent le déplacement du mors mobile 2a entre la position ouverte et la position fermée. La tige filetée 35 peut être une vis filetée sans fin. La tige filetée 35 est reliée à l'arbre 34 du moteur électrique 28. La tige filetée 35, l'arbre 34 et les mors 2a, 2b formant pince mobiles sont sensiblement alignés selon la direction longitudinale (X). La tige filetée 35 est mobile en rotation et immobile en translation.

La tige filetée 35 et l'orifice fileté de l'élément mobile 36 présentent un pas compris entre 0,65 mm et 0,85 mm pour bloquer le déplacement du mors mobile 2a lorsqu'il est en position fermée. De préférence, le pas est de 0,75 mm.

A titre d'exemple, pour une course du mors mobile 2a de 10 mm entre la position fermée et la position ouverte, correspondant à un déplacement transversal de l'élément mobile 36 le long de la tige filetée 35 de 10 mm, la vitesse du moteur est de 360 tours par minute, et le pas de la tige filetée 35 et de l'orifice fileté de l'élément mobile 36 est de 0,75 mm. Cette configuration permet de bloquer le déplacement du mors mobile 2a lorsqu'il est en position fermée de façon efficace. L'élément mobile 36 peut être un écrou par exemple.

En variante, le dispositif d'actionnement 29 peut comprendre un système à engrenages (pignon / crémaillère ou des roues coniques ou des cylindriques), un système à bille (vis à bille), des poulies, une courroie, une roue dentée, une chaine, une transmission par friction ou un système bielle manivelle/came.

Le mors mobile 2a peut être en inox, par exemple. Le mors mobile 2a est prolongé par le bras 33 rectiligne formant un coulisseau et s'étendant à l'intérieur du corps de préhension 7. Ce bras 33 coulisse dans un logement prévu dans le corps de préhension 7 entre la position fermée et la position ouverte du mors mobile 2a. Les deuxièmes moyens de transmission 36 et plus précisément l'élément mobile 36 est solidaire de ce bras 33. Dans les exemples donnés, l'élément mobile 36 est fixé au bras 33.

La poignée amovible 1 peut comprendre un commutateur 37 accessible depuis l'extérieur du corps de préhension 7 pour sélectionner manuellement le sens de rotation du moteur électrique 28. Un premier sens de rotation est dédié à l'ouverture du mors mobile 2a. Un deuxième sens de rotation opposé est dédié à la fermeture du mors mobile 2a. Par exemple, lorsque le sens de rotation dédié à la fermeture du mors mobile 2a est préalablement sélectionné avec le commutateur 37, une pression sur le bouton de commande 27 entraîne la rotation du moteur électrique 28 dans ce sens de rotation et la fermeture du mors mobile 2a.

En variante, la poignée amovible 1 peut comprendre un capteur pour détecter la présence de la poignée 1 contre ou à proximité immédiate du récipient 3. L'activation du commutateur peut entraîner la fermeture automatique du mors mobile 2a sans intervention de l'utilisateur.

Selon un mode de réalisation possible, le dispositif électrique et/ou électromécanique 5 peut comprendre des moyens autres que les moyens de fixation. Il peut comprendre une brosse rotative reliée à un arbre entrainé par le dispositif électromécanique ou un agitateur pour brasser les aliments, les écraser ou les mixer, par exemple. Dans ce mode de réalisation, la poignée 1 comprend des moyens de fixation qui peuvent être actionnés manuellement ou électromécaniquement.

Selon un mode de réalisation possible (non représenté), le dispositif électromécanique peut comprendre une came entrainée en rotation par la tige filetée. La came est solidaire de la tige filetée et est disposée à proximité de l'extrémité avant de la tige filetée. La came est logée dans un logement prévu dans le corps de préhension 7. Le logement débouche sur l'extérieur par la face supérieure du corps de préhension 7. La came est entraînée en rotation par le moteur électrique 28 de façon à être mobile entre une position de repos dans laquelle la came est logée à l'intérieur du logement et une position activée dans laquelle la came fait saillie sur la face supérieure du de la poignée 1. Dans la position de repos, l'axe principal de la came est sensiblement parallèle au plan horizontal de la poignée 1. Dans la position activée, l'axe principal de la came est sensiblement perpendiculaire au plan horizontal de la poignée 1 et orienté vers le haut lorsque la poignée 1 est fixée au récipient 3 posé sur un support horizontal. Dans cette position activée, la came fait saillie sur la face supérieure de la poignée 1 et permet de soulever plus ou moins le rebord d'un couvercle posé sur le récipient 3 pour régler le débit de la vapeur lorsque des aliments sont chauffés dans le récipient 3.

En variante, le dispositif électromécanique peut comprendre une roue dentée entrainée en rotation par la tige filetée qui est elle-même entrainée par le moteur électrique 28 (non représenté). La roue dentée est solidaire de la tige filetée et est disposée à proximité de l'extrémité avant de la tige filetée. La roue dentée est logée dans un logement prévu dans le corps de préhension 7. Le logement débouche sur l'extérieur par la face supérieure du corps de préhension 7. La roue dentée est entraînée en rotation par le moteur électrique 28 de façon à entraîner une crémaillère disposée sur le couvercle. La crémaillère entraîne en rotation une pale permettant de brasser des aliments (purée, poêlée de légume, soupe par exemple) disposés dans le fond du récipient 3.

En variante, la poignée 1 peut comprendre des moyens de soulèvement permettant de soulever un couvercle posé sur un récipient (non représenté).

Le dispositif électrique et/ou électromécanique 5 peut comprendre des moyens d'affichage alimentés par les moyens de stockage d'énergie électrique 6 et/ou la bobine 16. Ces moyens d'affichage peuvent comprendre un écran à cristaux liquides par exemple, pour permettre, entre autre, d'afficher l'autonomie de la source d'énergie électrique, l'heure, le temps de cuisson restant ou la température du récipient. L'écran à cristaux liquides est disposé sur la face supérieure de la poignée 1.

Le dispositif électrique et/ou électromécanique 5 peut comprendre des moyens de mesure tel un capteur de température ou un dispositif pour déterminer le poids des aliments contenus dans le récipient 3, par exemple. La température ou le poids peuvent être affichés sur l'écran à cristaux liquides. La poignée 1 peut comprendre une horloge et un chronomètre (« timer »). Les moyens de mesure sont alimentés par les moyens de stockage d'énergie électrique 6 et/ou la bobine 16 et sont reliés au circuit électronique.

Le dispositif électrique et/ou électromécanique 5 peut comprendre des moyens de communication sans fil pour recevoir et/ou transmettre des informations à une station de base. Les moyens de communication peuvent comprendre un émetteur et/ou un récepteur radiofréquence alimentés par les moyens de stockage d'énergie électrique 6 et/ou la bobine 16 et sont reliés au circuit électronique. Par exemple, la station de base peut transmettre des recettes de cuisine à la poignée 1. Ces dernières sont affichées sur un écran à cristaux liquides. La poignée 1 peut transmettre des signaux représentatifs de la température du récipient à la station de base.

Le dispositif électrique et/ou électromécanique 5 peut comprendre des moyens d'éclairage, telle une diode par exemple, pour éclairer les aliments dans le récipient 3. Les moyens d'éclairage sont disposés sur la face supérieure de la poignée 1 et à l'avant de celui-ci. Les moyens d'éclairage sont alimentés par les moyens de stockage d'énergie électrique 6 et/ou la bobine 16.

Les variantes ci-dessus sont possibles pour une poignée fixée de manière permanente au récipient 3 ou une poignée amovible de celui-ci.

Une carte ou circuit électronique peut gérer le sens de rotation du moteur, la détection du serrage du mors 2a mobile, l'affichage d'information sur l'état de la poignée 1 (ouvert/fermée, autonomie, problème particulier), et la charge des batteries, par exemple.

Les moyens de connexion électromagnétique 8 sont accessibles depuis l'extérieur de la poignée amovible 1 pour permettre le rechargement en courant de la source d'énergie électrique rechargeable 6.

Les moyens de connexion électromagnétiques 8 peuvent comprendre une prise femelle 46 du type prise « jack », comme illustré sur la figure 9. Cette prise femelle 46 est disposée sur le corps de préhension 7 de la poignée amovible 1. Elle peut être disposée sur la paroi latérale du corps de préhension 7. La prise femelle 46 est connectable au secteur via un cordon d'alimentation comprenant une fiche mâle type fiche « jack » adapté à s'insérer dans la prise femelle 46 de la poignée amovible 1.

Comme illustré sur la figure 9, les moyens de connexion électromagnétique 8 peuvent comprendre deux bornes de connexion électrique 47a, 47b connectables de façon amovible à deux bornes de connexion électrique complémentaires 51a, 51b prévues sur une base de rechargement 50, représentée sur la figure 13, pour permettre le rechargement de la source d'énergie électrique 6 en courant électrique. Les bornes de connexion électrique 47a, 47b sont disposées sur la face arrière de la poignée amovible 1. Les bornes de connexion électrique 47a, 47b peuvent être des plots de connexion ou des contacts. La poignée amovible 1 peut être posée sur la base de rechargement 50 de façon à être sensiblement verticale ou inclinée par rapport à la verticale lorsque la base de rechargement 50 est posée sur un support horizontal. La base de rechargement 50 est reliée au secteur (230 V par exemple).

En variante et comme représenté sur la figure 10, les moyens de connexion électromagnétiques 8 peuvent comprendre une bobine d'induction secondaire 47 reliée à la source d'énergie électrique rechargeable, comme illustré sur la figure 10. La bobine d'induction secondaire 47 est adaptée à recevoir un flux électromagnétique générée par une bobine d'induction primaire 48 prévue sur une base de rechargement 49.

Le corps de préhension 7 comprend une cavité 52 débouchant de sa surface externe. La cavité 52 est entourée par la bobine d'induction secondaire 47. La bobine d'induction secondaire 47 est logée à l'intérieur du corps de préhension 7. La cavité 52 est adaptée à recevoir la bobine d'induction primaire 48 de la base de rechargement 49. Le transfert d'énergie de la bobine d'induction primaire 48 vers la bobine d'induction secondaire 47 se fait sans contact entre ces dernières. La cavité 52 forme un trou borgne dans le corps de préhension 7. Elle est délimitée par une paroi circulaire et un fond. La bobine d'induction secondaire 47 entoure la surface externe de la paroi circulaire. Ces moyens de connexion magnétiques permettent de garantir l'étanchéité du corps de préhension 7 et forment des moyens de connexion étanches.

## Revendications

1. Poignée (1) amovible de récipient de cuisson d'aliments (3) comprenant une paroi latérale (4), ladite poignée comprenant :
- un corps de préhension (7),
- des moyens de fixation (2) connectables au récipient de cuisson (3) et déconnectables de celui-ci,
- un dispositif électrique et/ou électromécanique (5) logé dans le corps de préhension (7),
- une source d'énergie électrique rechargeable (6) alimentant en courant électrique le dispositif électrique et/ou électromécanique (5),
**caractérisée en ce qu'**elle comprend :
- des moyens de connexion électromagnétique (8) reliés à la source d'énergie électrique rechargeable (6) et connectables électromagnétiquement à une source d'alimentation électrique externe (16) à la poignée pour permettre le rechargement de la source d'énergie électrique rechargeable (6).

2. Poignée amovible selon la revendication 1, **caractérisé en ce que** les moyens de connexion électromagnétique (8) comprennent au moins une borne (10, 10') adaptée à venir en contact avec au moins une borne complémentaire (11, 11') prévue sur le récipient de cuisson (3) et reliée à la source d'alimentation électrique externe (16).

3. Poignée amovible selon la revendication 2, **caractérisé en ce que** les moyens de fixation (2) comprennent une surface de contact (12) venant, dans un état fixé, en contact avec une surface de contact complémentaire (13) prévue sur le récipient (3) afin d'assurer la fixation de la poignée sur le récipient, ladite surface de contact (12) des moyens de fixation (2) portant au moins une borne (10, 10').

4. Poignée amovible (1) selon la revendication 1, **caractérisé en ce que** les moyens de fixation (2) comprennent deux mors (2a, 2b) formant pince mobiles l'un par rapport à l'autre pour fixer la poignée amovible (1), les moyens de connexion électromagnétique (8) comprenant au moins une borne (10, 10') disposée sur l'un des deux mors (2a, 2b).

5. Poignée amovible (1) selon la revendication 4, **caractérisé en ce que** les deux mors (2a, 2b) pincent la paroi latérale (4) du récipient (3) sur laquelle est disposée au moins une borne complémentaire (11, 11'), chaque borne (10, 10') de la poignée étant en contact avec cette borne complémentaire (11, 11').

6. Poignée amovible (1) selon la revendication 4 ou 5, **caractérisé en ce que** les deux mors (2a, 2b) formant pince comprennent un mors fixe (2b) et un mors mobile (2a) par rapport au corps de préhension (7), les bornes (10, 10') étant disposées sur le mors fixe (2b).

7. Poignée amovible (1) selon la revendication 6, **caractérisé en ce que** le mors fixe (2b) est formé par une partie avant (17) du corps de préhension (7) qui est en contact avec une surface externe (14c) de la paroi du récipient (3).

8. Poignée amovible (1) selon l'une quelconque des revendications 2 à 7, **caractérisé en ce que** la ou les bornes (10, 10') de la poignée amovible (1) sont des plots de contact électrique (23) repoussés par des moyens de rappel élastique (24), pour limiter la résistance de contact à moins 100mOmhs, et de préférence à moins de 10mOmhs.

9. Poignée amovible (1) selon l'une quelconque des revendications 1 à 8, **caractérisé en ce que** le dispositif électrique et/ou électromécanique (5) comprend les moyens de fixation (2) de façon à obtenir des moyens de fixation motorisés.

10. Poignée amovible (1) selon l'une quelconque des revendications 1 à 9, **caractérisé en ce que** le corps de préhension (7) comprend des moyens d'étanchéité (43) pour assurer l'étanchéité aux liquides de la source d'énergie électrique rechargeable (6).

11. Poignée amovible (1) selon l'une quelconque des revendications 1 à 10, **caractérisé en ce que** les moyens de connexion électromagnétique comprennent une bobine d'induction secondaire (47) adaptée à recevoir un flux électromagnétique généré par une bobine d'induction primaire (48) prévue sur une base de rechargement (49).

12. Poignée amovible (1) selon la revendication 11, **caractérisé en ce que** le corps de préhension (7) comprend une cavité (52) délimitée par un fond et une paroi latérale entourée par la bobine d'induction secondaire (47), ladite cavité (52) étant adaptée à recevoir la bobine d'induction primaire (48) de la base de rechargement (49).

13. Ensemble comprenant un récipient de cuisson d'aliments (3) et une poignée (1), selon l'une des revendications 1 à 12, fixée de façon amovible au récipient par lesdits moyens de fixation (2).

## Patentansprüche

1. Abnehmbarer Griff (1) für einen Behälter (3) zum Kochen von Speisen mit einer Seitenwand (4), wobei der genannte Griff Folgendes umfasst:
- einen Griffkörper (7),
- Befestigungsmittel (2), die mit dem Kochbehälter (3) verbunden und von ihm getrennt werden können,
- eine elektrische und/oder elektromechanische Vorrichtung (5), die sich in dem Griffkörper (7) befindet,
- eine wiederaufladbare Quelle (6) elektrischer Energie, die die elektrische und/oder elektromechanische Vorrichtung (5) mit elektrischem Strom versorgt,
**dadurch gekennzeichnet, dass** er Folgendes umfasst:
- elektromagnetische Anschlussmittel (8), die mit der wiederaufladbaren Quelle (6) elektrischer Energie verbunden sind und elektromagnetisch an eine außerhalb des Griffs befindliche Stromquelle (16) angeschlossen werden können, um das Wiederaufladen der wiederaufladbaren Quelle (6) elektrischer Energie zu gestatten.

2. Abnehmbarer Griff nach Anspruch 1, **dadurch gekennzeichnet, dass** die elektromagnetischen Anschlussmittel (8) zumindest einen Anschluss (10, 10') umfassen, der dafür ausgelegt ist, mit zumindest einem zusätzlichen Anschluss (11, 11') in Kontakt zu kommen, der an dem Kochbehälter (3) vorgesehen und mit der externen Stromquelle (16) verbunden ist.

3. Abnehmbarer Griff nach Anspruch 2, **dadurch gekennzeichnet, dass** die Befestigungsmittel (2) eine Kontaktfläche (12) aufweisen, die im befestigten Zustand in Kontakt mit einer zusätzlichen Kontaktfläche (13) kommt, die an dem Behälter (3) vorgesehen ist, um die Befestigung des Griffs am Behälter sicherzustellen, wobei die genannte Kontaktfläche (12) der Befestigungsmittel (2) zumindest einen Anschluss (10, 10') trägt.

4. Abnehmbarer Griff (1) nach Anspruch 1, **dadurch gekennzeichnet, dass** die Befestigungsmittel (2) zwei Backen (2a, 2b) umfassen, die beweglich zueinander sind und eine Klemmvorrichtung zur Befestigung des abnehmbaren Griffs (1) bilden, wobei die elektromagnetischen Anschlussmittel (8) zumindest einen Anschluss (10, 10') umfassen, der sich an einer der beiden Backen (2a, 2b) befindet.

5. Abnehmbarer Griff (1) nach Anspruch 4, **dadurch gekennzeichnet, dass** die beiden Backen (2a, 2b) die Seitenwand (4) des Behälters (3) einklemmen, an der sich zumindest ein zusätzlicher Anschluss (11, 11') befindet, wobei sich jeder Anschluss (10, 10') des Griffs in Kontakt mit diesem zusätzlichen Anschluss (11, 11') befindet.

6. Abnehmbarer Griff (1) nach Anspruch 4 oder 5, **dadurch gekennzeichnet, dass** die beiden Backen (2a, 2b), die eine Klemmvorrichtung bilden, eine feststehende Backe (2b) und eine in Bezug auf den Griffkörper (7) bewegliche Backe (2a) umfasst, wobei sich die Anschlüsse (10, 10') an der feststehenden Backe (2b) befinden.

7. Abnehmbarer Griff (1) nach Anspruch 6, **dadurch gekennzeichnet, dass** die feststehende Backe (2b) durch einen vorderen Teil (17) des Griffkörpers (7) gebildet wird, der sich in Kontakt mit einer Außenfläche (14c) der Wand des Behälters (3) befindet.

8. Abnehmbarer Griff (1) nach einem der Ansprüche 2 bis 7, **dadurch gekennzeichnet, dass** der Anschluss oder die Anschlüsse (10, 10') des abnehmbaren Griffs (1) elektrische Kontaktplättchen (23) sind, die von elastischen Rückstellmitteln (24) zurückgedrückt werden, um den Kontaktwiderstand auf unter 100 mOhm und vorzugsweise auf unter 10 mOhm zu begrenzen.

9. Abnehmbarer Griff (1) nach einem der Ansprüche 1 bis 8, **dadurch gekennzeichnet, dass** die elektrische und/oder elektromechanische Vorrichtung (5) Befestigungsmittel (2) umfasst, um angetriebene Befestigungsmittel zu erhalten.

10. Abnehmbarer Griff (1) nach einem der Ansprüche 1 bis 9, **dadurch gekennzeichnet, dass** der Griffkörper (7) Dichtungsmittel (43) umfasst, die die Dichtigkeit der wiederaufladbaren Quelle (6) elektrischer Energie gegen Flüssigkeiten sicherstellen.

11. Abnehmbarer Griff (1) nach einem der Ansprüche 1 bis 10, **dadurch gekennzeichnet, dass** die elektromagnetischen Anschlussmittel eine sekundäre Induktionsspule (47) umfassen, die dafür ausgelegt ist, einen von einer an einer Ladestation (49) vorgesehenen primären Induktionsspule (48) erzeugten elektromagnetischen Fluss aufzunehmen.

12. Abnehmbarer Griff (1) nach Anspruch 11, **dadurch gekennzeichnet, dass** der Griffkörper (7) eine Vertiefung (52) umfasst, die durch einen Boden und eine Seitenwand begrenzt ist, die von der sekundären Induktionsspule (47) umgeben ist, wobei die genannte Vertiefung (52) dafür ausgelegt ist, die primäre Induktionsspule (48) der Ladestation (49) aufzunehmen.

13. Einheit, die einen Behälter (3) zum Kochen von Speisen und einen Griff (1) nach einem der Ansprüche 1 bis 12 umfasst, der durch die genannten Befestigungsmittel (2) abnehmbar am Behälter befestigt wird.

## Claims

1. Detachable handle (1) for a receptacle used for cooking food (3) comprising a lateral panel (4), said handle comprising:
- a handle body (7),
- fastening means (2) connected to the cooking receptacle (3) and detachable therefrom,
- an electrical and/or electromagnetic device (5) housed in the handle body (7),
- a source of rechargeable electrical energy (6) supplying an electrical current to the electric and/or electromagnetic device (5),
**characterised in that** it comprises:
- means of electromagnetic connection (8) attached to the rechargeable electrical energy source (6) and electromagnetically connectable to an external electrical power source (16) at the handle to enable it to be recharged by a rechargeable electrical energy source (6).

2. Detachable handle according to claim 1, **characterised in that** the means of electromagnetic connection (8) contain at least one terminal (10, 10') adapted to come into contact with at least one supplementary terminal (11, 11') on the cooking receptacle (3) and connected to the external electrical power source. (16).

3. Detachable handle according to claim 2, **characterised in that** the fastening means (2) comprise a contact surface (12) coming into contact, when assembled, with a supplementary contact (13) on the receptacle (3) in order to ensure the fastening of the handle on the receptacle, said contact surface (12) of the fastening means (2) including a least one terminal (10, 10').

4. Detachable handle (1) according to claim 1, **characterised in that** the fastening means (2) comprise at least two jaws (2a, 2b) forming mobile clamps, one over the other, to attach the detachable handle (1), the electromagnetic connection means (8) containing at least one terminal (10, 10') positioned on one of the two jaws (2a, 2b).

5. Detachable handle (1) according to claim 4, **characterised in that** the two jaws (2a, 2b) clamp onto the lateral panel (4) of the receptacle (3) on which at least one supplementary terminal (11, 11') is provided, each terminal (10, 10') on the handle being in contact with this supplementary terminal (11, 11').

6. Detachable handle (1) according to claim 4 or 5, **characterised in that** the two jaws (2a, 2b) forming a clamp comprising a fixed jaw (2b) and a mobile jaw (2a) in relation to the handle body (7), the terminals (10, 10') being positioned on the fixed jaws (2b).

7. Detachable handle (1) according to claim 6, **characterised in that** the fixed jaw (2b) is composed of a front part (17) of the handle body (7) which is in contact with the external surface (14c) of the receptacle's panel (3).

8. Detachable handle (1) according to any of claims 2 to 7, **characterised in that** the terminal(s) (10, 10') of the detachable handle (1) are electrical contact elements (23) resisted by elastic means (24), to limit the contact resistance to at least 100m Omhs, and preferably less than 10m Omhs.

9. Detachable handle (1) according to any of claims 1 to 8, **characterised in that** the electrical and/or electromagnetic device (5) comprises the fastening means (2) in order to obtain motorised fastening means.

10. Detachable handle (1) according to any of claims 1 to 9, **characterised in that** the handle body (7) contains means of sealing (43) to ensure that the rechargeable electrical energy source (6) remains waterproof.

11. Detachable handle (1) according to any of claims 1 to 10, **characterised in that** the means of electrical connection comprise a secondary induction coil (47) adapted to receive an electromagnetic flow generated by a primary induction coil (48) positioned on the recharging base (49).

12. Detachable handle (1) according to claim 11, **characterised in that** the handle body (7) contains a cavity (52) delineated by a base and a lateral partition surrounded by a secondary induction coil (47), said cavity (52) being adapted to receive the primary induction coil (48) of the recharging base (49).

13. Set containing a cooking receptacle (3) and a handle (1), according to any of claims 1 to 12, assembled so that it may be detached from the receptacle by the said fastening means (2).
